# FASCICULE DE BREVET EUROPEEN

(11) **EP 2 154 391 B1**
(45) Date de publication et mention de la délivrance du brevet: **23.03.2011**
(21) Numéro de dépôt: 09290616.3
(22) Date de dépôt: 05.08.2009
(51) Int. Cl.: F16D 65/14, F16D 65/32, B60T 17/08

(54) **Cylindre de frein comportant une chambre de pression**
Brake cylinder comprising a pressure chamber
Bremszylinder mit Druckkammer

(30) Priorité: 13.08.2008 FR 0855563
(43) Date de publication de la demande: 17.02.2010
(73) Titulaire: Faiveley Transport Amiens, 80000 Amiens (FR)
(72) Inventeur: Beauvois, Damien, 80000 Amiens (FR); Goncalves, Claudino, 80620 Ribeaucourt (FR)
(74) Mandataire: Lepelletier-Beaufond, François

(56) Documents cités:
- BE-A- 533 948
- FR-A- 2 343 284
- US-A- 3 995 537

## Description

L'invention concerne le domaine du freinage des véhicules.

Elle concerne plus particulièrement un cylindre de frein commandé par un fluide sous pression et adapté à agir sur une timonerie, telle que celle d'un frein ferroviaire, afin d'actionner un dispositif de freinage, tel que par exemple un ou des patins de friction adaptés à serrer un disque de frein relié aux roues du véhicule ou directement la roue du véhicule.

On connaît du document US 3,995,537 un tel cylindre de frein comportant un piston solidaire d'une pièce de coin (pièce comportant une première surface de travail et une deuxième surface de travail inclinée par rapport à la première surface de travail) qui est insérée entre deux butées à roulement de sorte que la descente du piston provoque l'enfoncement de la pièce en coin entre les deux butées à roulements et par conséquent l'écartement de ces deux butées de sorte à actionner une tige de poussée commandant le freinage.

Ce document précise que les caractéristiques de sortie de ce cylindre de frein peuvent être modifiées en modifiant l'angle de la pièce de coin, c'est-à-dire l'angle d'inclinaison entre la première surface de travail et la deuxième surface de travail de la pièce de coin. Ainsi, en substituant à la pièce de coin une autre pièce de coin d'angle supérieur (respectivement inférieur), on obtient, pour un même enfoncement de piston, un mouvement de sortie de la tige de poussée de course et donc une force de freinage supérieure (respectivement inférieure).

L'invention vise à fournir, de façon commode et économique, un cylindre de frein du même genre, c'est-à-dire permettant, par une modification structurelle simple, d'obtenir des caractéristiques de sortie différentes.

A cet effet, l'invention vise un cylindre de frein adapté à actionner un frein ferroviaire, caractérisé en ce qu'il comporte :
- un corps ;
- un piston mobile par rapport au corps suivant une direction axiale prédéterminée ;
- une membrane déformable fermant, entre ledit. piston et ledit corps, une chambre de pression dont le volume varie avec la position dudit piston par rapport audit corps ; et
- des moyens de conformation de ladite membrane pour définir une zone annulaire où se produit la déformation de la membrane quand le piston change de position par rapport au corps ;
ledit corps, ledit piston et lesdits moyens de conformation étant agencés pour que la différence entre le diamètre interne du corps et le diamètre externe du piston soit au moins égale à quatre fois la différence entre le diamètre interne et le diamètre externe de la zone de déformation de la membrane, grâce à quoi il reste au moins trois quarts de la différence entre le diamètre interne du corps et le diamètre externe du piston pour former au moins une zone annulaire où la membrane est rigidifiée par lesdits moyens de conformation, la ou les zone(s) de rigidification de la membrane étant située(s) entre le corps et la zone de déformation de la membrane et/ou entre la zone de déformation de la membrane et le piston.

Ainsi, la ou les zones de rigidification procurée(s) par les moyens de conformation du cylindre selon l'invention occupe(nt) une surface particulière grande et en tout cas bien plus importante que les moyens de conformation conventionnels où l'on cherche à positionner la zone de déformation aussi près que possible aussi bien du corps que du piston.

Le positionnement, entre le corps et le piston, de la zone de déformation, et donc le positionnement de la ou des zone(s) de rigidification de la membrane, sélectionne le diamètre efficace du cylindre de frein, et donc la force de freinage qu'il est capable d'exercer pour une pression prédéterminée dans la chambre de pression.

Ainsi, si l'on prend en compte la pression maximale prédéfinie (normalisée) du circuit pneumatique de freinage d'un train, le cylindre selon l'invention, avec le même corps et le même piston, permet, par le choix de l'agencement des moyens de conformation, d'offrir une large gamme de force maximale de freinage.

Selon des caractéristiques préférées pour des raisons de simplicité et de commodité tant à la fabrication qu'à l'utilisation :
- ladite membrane est annulaire avec ses deux extrémités fixées respectivement au corps et au piston ;
- ledit cylindre de frein comporte en outre une jupe de guidage s'étendant sur tout le pourtour dudit piston en direction dudit corps, à l'extérieur de ladite chambre de pression et munie d'un joint de glissement adapté à coopérer avec ledit corps ;
- lesdits moyens de conformation comportent au moins une plaque annulaire rigide et des moyens de serrage de ladite membrane sur ledit corps ou ledit piston ;
- ledit cylindre de frein comporte une seule dite plaque annulaire fixée audit corps et s'étendant en direction dudit piston ;
- ledit cylindre de frein comporte une seule dite plaque annulaire fixée audit piston et s'étendant en direction dudit corps ;
- ledit cylindre de frein comporte une première dite plaque annulaire fixée audit corps et s'étendant en direction dudit piston et une seconde dite plaque annulaire fixée audit piston et s'étendant en direction dudit corps ;
- ladite membrane recouvre ledit piston, son extrémité étant fixée au corps ;
- lesdits moyens de conformation comportent au moins un élément annulaire disposé juste en dessous de la dite membrane entre le corps et le piston ;
- lesdits moyens de conformation comportent deux dits éléments annulaires fixés par l'une de leurs extrémités, respectivement audit corps et audit piston ;
- l'extrémité de la membrane déformable est montée serrée sur le corps entre un épaulement du corps et l'élément annulaire fixé par l'une de ses extrémités audit corps ;
- l'élément annulaire fixé audit piston par l'une de ses extrémités, est muni à son extrémité opposée, d'un joint de glissement adapté à coopérer avec la paroi interne de l'élément annulaire fixé audit corps ;
- ladite membrane est adaptée à se dérouler dans ladite zone de déformation en s'appuyant à l'extérieur contre la paroi interne de l'élément annulaire fixé audit corps et à l'intérieur, contre la paroi externe de l'élément annulaire fixé audit piston ;
- lesdits moyens de conformation comportent un seul élément annulaire fixé par l'une de ses extrémités, audit piston ;
- l'extrémité de la membrane déformable est montée serrée sur le corps entre un épaulement du corps et un anneau de serrage de corps ;
- l'élément annulaire fixé audit piston par l'une de ses extrémités, est muni à son extrémité opposée, d'un joint de glissement adapté à coopérer avec le bord interne dudit corps ;
- ladite membrane est adaptée à se dérouler dans ladite zone de déformation en s'appuyant à l'extérieur contre la paroi interne dudit corps et à l'intérieur, contre la paroi externe de l'élément annulaire fixé audit piston.

Selon un autre aspect, l'invention vise une gamme de cylindres de frein, caractérisée en ce qu'elle comporte un premier cylindre de frein et un deuxième cylindre de frein, le premier cylindre de frein et le deuxième cylindre de frein comportant chacun un même corps, un même piston mais dont les moyens de conformation et les zones annulaires de déformation de ladite membrane sont différents.

Une telle gamme peut donc être produite de manière particulièrement économique, les éléments principaux des cylindres de frein étant identiques.

Selon des caractéristiques préférées pour des raisons de simplicité et de commodité tant à la fabrication qu'à l'utilisation :
- le premier cylindre de frein et le deuxième cylindre de frein comporte également chacun une même membrane ;
- ladite gamme de cylindres de frein comporte au moins quatre cylindres dont les moyens de conformation et les zones annulaires de déformation de ladite membrane sont différents.

D'autres caractéristiques et avantages de l'invention apparaissent à la lumière de la description qui va suivre d'un mode de réalisation préféré donné à titre d'exemple non limitatif, description faite en référence aux dessins annexés, dans lesquels :
- les figures 1 et 2 illustrent schématiquement les principes de fonctionnement d'une timonerie de frein ferroviaire actionnée par un cylindre de frein, ce cylindre de frein étant respectivement en position d'attente (figure 1) et en position de freinage (figure 2) ;
- la figure 3 est une juxtaposition de deux demi-coupes d'un cylindre de frein selon un premier mode de réalisation de l'invention, la demi-coupe de gauche illustrant une certain agencement des moyens de conformation de la membrane et la demi-coupe de droite illustrant un autre agencement de ces moyens de conformation ;
- les figures 4 à 6 sont des vues en coupe du cylindre de frein conforme à la demi-vue de droite de la figure 3, respectivement en position d'attente, à mi-freinage et en position de freinage ;
- les figures 7 à 9 illustrent, de manière similaire aux figures 4 à 6, le fonctionnement du cylindre de frein selon la demi-coupe de gauche de la figure 3 ; et
- la figure 10 est une juxtaposition de deux demi-coupes d'un cylindre de frein selon un deuxième mode de réalisation de l'invention, la demi-coupe de gauche illustrant une certain agencement des moyens de conformation de la membrane et la demi-coupe de droite illustrant un autre agencement de ces moyens de conformation.

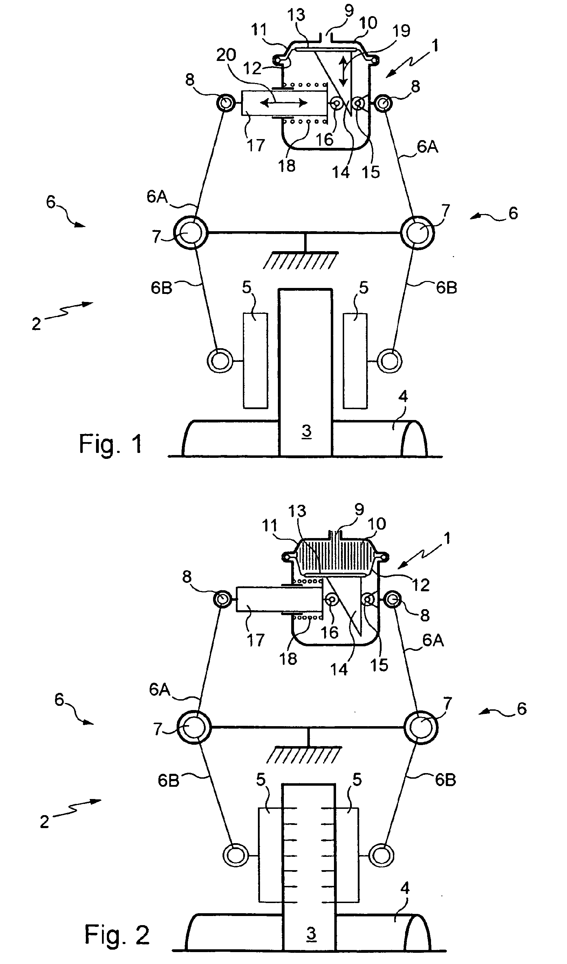

Les figures 1 et 2 représentent un cylindre de frein 1 qui, dans le présent exemple, est adapté à actionner une timonerie 2 de frein ferroviaire. Cet ensemble permet d'agir sur un disque de frein 3 monté par exemple sur un essieu 4 du véhicule ferroviaire, ou directement sur la roue à freiner. Le disque de frein 3 est ici vu de profil et seule sa moitié supérieure a été représentée.

La timonerie 2 comporte de manière classique deux patins de freinage 5 disposés de part et d'autre du disque de frein 3 et qui, en l'absence de sollicitation, sont à l'écart du disque de frein 3 (voir figure 1) et qui, lors d'une action de freinage, sont sollicités par la timonerie 2 contre le disque de frein 3 (voir figure 2) pour ralentir et/ou stopper le disque de frein 3 par friction.

La timonerie 2 comporte à cet effet deux leviers 6 rigides comportant chacun un bras supérieur 6A et un bras inférieur 6B solidaires, chaque levier 6 étant monté en rotation autour d'un axe 7 solidaire du châssis du véhicule ferroviaire. Le bras inférieur 6B de chaque levier 6 est relié à l'un des patins de freinage 5. Le bras supérieur 6A de chaque levier 6 est quant à lui relié à une articulation 8.

Compte-tenu du montage de cette timonerie 2 classique, l'écartement des deux articulations 8 entraîne le serrage du frein tandis que le rapprochement de ces articulations 8 entraîne le desserrage du frein.

Le cylindre de frein 1 est rattaché par deux de ses extrémités aux articulations 8 et est adapté à imprimer aux articulations 8 un tel mouvement de rapprochement ou d'éloignement.

A cet effet, le cylindre de frein 1 est raccordé par un conduit 9 à une source de fluide sous pression telle que, par exemple, un circuit pneumatique.

Le cylindre de frein 1 comporte notamment un corps 11, un piston 13 et une membrane déformable plate 12 fixée par ses extrémités respectivement contre le diamètre interne du corps 11 et le diamètre externe du piston 13, de sorte à définir une chambre de pression 10. Le piston 13 est lui-même attaché à une pièce de coin 14 présentant une section triangulaire. La pièce de coin 14 coopère quant à elle avec une première butée à roulement 15 reliée au corps 11 et avec une deuxième butée à roulement 16 reliée à une tige de poussée 17.

La tige de poussée 17 est formée d'un dispositif couramment dénommé « régleur » et permettant la transmission directe des déplacements de la butée à roulement 16 à l'articulation 8 correspondante tout en rattrapant les jeux entre la deuxième butée à roulement et la pièce de coin 14. Les régleurs sont des dispositifs classiques qui ne seront pas plus décrits en détail ici. Il suffit de mentionner ici que la tige de poussée 17 est adaptée à transmettre à l'articulation 8 correspondante les efforts s'exerçant sur la deuxième butée à roulement 16.

Un ressort 18 est de plus disposé entre le corps 11 et la tige de poussée 17 et a pour fonction de solliciter la deuxième butée à roulement 16 contre la pièce de coin 14.

Le cylindre de frein 1 est ainsi monté entre les deux articulations 8, le corps 11 étant solidaire de l'une de ces articulations 8 et l'extrémité de la tige de poussée 17 étant solidaire de l'autre articulation 8.

Le piston 13 et la pièce de coin 14 sont mobiles selon une première direction 19 qui correspond à la verticale sur les figures 1 et 2. La tige de poussée 17 est quant à elle mobile selon une deuxième direction 20, perpendiculaire à la première direction 19 et qui correspond à l'horizontale sur les figures 1 et 2.

Compte-tenu de cette configuration, lorsque la pièce de coin 14 est sollicitée dans la première direction 19 à enfoncement entre les butées 15, 16, la tige de poussée 17 est par conséquent sollicitée selon la deuxième direction 20 pour provoquer un écartement des deux articulations 8. La pièce de coin 14 permet donc de transformer la course verticale du piston 13 en une course horizontale de la tige de poussée 17 afin d'actionner les leviers 6.

Sur la figure 1, le cylindre de frein 1 est représenté en position d'attente. Dans cette position, la pression de fluide n'est pas exercée, c'est-à-dire que le conduit 9 est mis à la pression atmosphérique. La chambre de pression 10 présente alors un volume minimal, la membrane 12 venant se plaquer contre le corps 11 grâce au ressort 18 qui sollicite la deuxième butée à roulement 16 en direction de la première butée à roulement 15 ce qui provoque la montée de la pièce de coin 14 et du piston 13.

Sur la figure 2, le cylindre de frein 1 est représenté en position de freinage. Le conduit 9 reçoit le fluide sous pression qui remplit la chambre de pression 10 et sollicite le piston 13 et la pièce de coin 14 vers le bas, ce qui a pour effet d'écarter l'une de l'autre les butées 15, 16 et donc les articulations 8. Le volume de la chambre de pression 10 est maximal dans cette position.

Dès que la pression du fluide est supprimée au conduit 9, le cylindre de frein 1 revient à sa position d'attente de la figure 1 sous l'effet du ressort 18 en chassant le fluide de la chambre de pression 10.

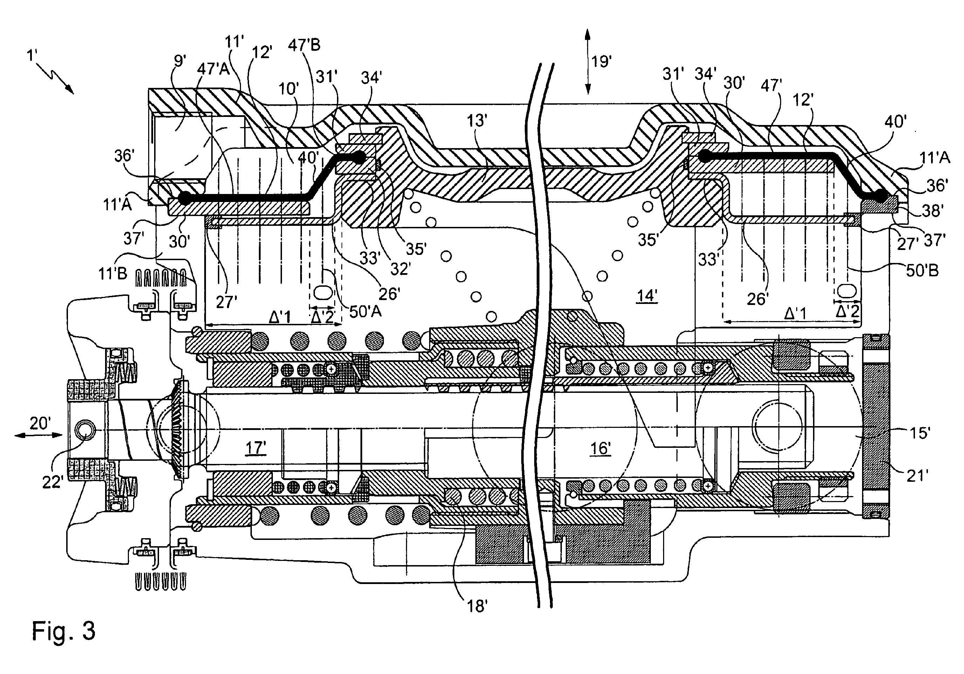

A l'appui de la figure 3, on va maintenant décrire le cylindre de frein 1', selon un premier mode de réalisation de l'invention. Les éléments semblables aux éléments du cylindre de frein 1 décrit précédemment gardent la même numérotation mais avec un '.

Le cylindre de frein 1' comporte ainsi un corps 11' formant une enveloppe dans laquelle sont montés les différents éléments du cylindre de frein 1', notamment un piston 13' mobile selon une première direction 19' et fixé à une pièce de coin 14' adaptée à coopérer à enfoncement entre une première butée à roulement 15' et une deuxième butée à roulement 16'. La première butée à roulement 15' est montée sur le corps 11' et la deuxième butée à roulement 16' est montée à l'extrémité d'une tige de poussée 17', mobile selon une deuxième direction 20', dont l'autre extrémité 22' est destinée à être raccordée à l'une des articulations 8 des schémas des figures 1 et 2, l'autre articulation 8 étant fixée sur une fixation 21' solidaire du corps 11'.

Un ressort 18' sollicite la tige de poussée 17' pour que la deuxième butée à roulement 16' se rapproche de la première butée à roulement 15', c'est-à-dire vers la position d'attente du cylindre de frein 1' (qui est celle représentée à la figure 3).

Le corps 11' comporte un conduit 9' pour le branchement du fluide sous pression, ce conduit 9' débouchant dans une chambre de pression 10' située entre le corps 11' et le piston 13' et fermée par une membrane annulaire déformable plate 12' dont les deux extrémités sont respectivement fixées au corps 11' et au piston 13'.

La membrane 12' est réalisée en un matériau souple tel que par exemple un élastomère adapté à la coopération avec le fluide sous pression.

Une jupe annulaire de guidage 26' s'étend également entre le piston 13' et le corps 11', en dessous de la chambre de pression 10'. Cette jupe rigide 26' est fixée par une première extrémité au piston 13' et comporte à sa deuxième extrémité, un joint de glissement 27' adapté à racler les bords du corps 11'. Cet ensemble 26', 27' permet de garantir un déplacement purement axial du piston 13'.

Une plaque annulaire 30' réalisée en un matériau rigide, est par ailleurs disposée entre la membrane 12' et la jupe 26'. Les parties gauche et droite de la figure 3 illustrent deux configurations distinctes de positionnement de cette plaque annulaire 30'.

Sur la demi-vue de gauche de la figure 3, la plaque annulaire 30' est fixée avec l'une des extrémités de la membrane 12' sur le corps 11' de sorte que la plaque annulaire 30' s'étend en direction du piston 13'.

Sur la demi-vue de droite, en revanche, la plaque annulaire 30' est fixée avec l'une des extrémités de la membrane 12' sur le piston 13'. La plaque annulaire 30' s'étend en direction du corps 11'.

En référence à la demi-vue de gauche de la figure 3, la première extrémité de la membrane déformable 12' est fixée sur le piston 13' en étant pincée entre un premier anneau 31' de serrage de piston et un deuxième anneau 32' de serrage de piston. Ce serrage est réalisé par la mise en butée du deuxième anneau 32' contre la jupe de guidage 26', elle-même disposée contre un épaulement 33' du piston 13' et par un anneau de butée 34', par exemple un anneau élastique, fixé contre le premier anneau 31'.

Sur la demi-vue de droite de la figure 3, la première extrémité de la membrane déformable 12' est fixée au piston 13' de manière semblable, si ce n'est que le deuxième anneau 32' est remplacé par la plaque annulaire 30'.

Dans les deux cas, un joint 35' est disposé entre le deuxième anneau 32' et le piston 13' ou entre la plaque annulaire 30' et le piston 13', pour assurer l'étanchéité du montage.

Sur la demi-vue de gauche de la figure 3, l'autre extrémité de la membrane déformable 12' est rattachée au corps 11', qui est ici divisé en deux demi-corps 11'A et 11'B assemblés l'un à l'autre, en serrant la membrane déformable 12' et la plaque annulaire 30' entre deux épaulements 36' et 37' pratiqués respectivement dans les deux demi-corps 11'A et 11'B.

Sur la demi-vue de droite de la figure 3, le montage de l'autre extrémité de la membrane déformable 12' se fait de manière similaire si ce n'est que la plaque annulaire 30' est remplacée par un anneau 38' de serrage de corps.

Quelle que soit la configuration adoptée, la plaque annulaire 30' et les anneaux de serrage 31', 32' et 38' constituent des moyens de conformation de la membrane déformable 12' qui définissent une zone annulaire de déformation 40' de cette membrane 12' quand le piston 13' change de position par rapport au corps 11'. Le piston 13' et les moyens de conformation 30', 31', 32' et 38' sont agencés pour que la différence Δ'1 entre le diamètre interne du corps 11' et le diamètre externe du piston 13' soit au moins égale à quatre fois la différence Δ'2 entre le diamètre interne et le diamètre externe de la zone de déformation 40'.

Il reste ainsi au moins les trois quarts de cette différence Δ'1 pour former selon la configuration de positionnement de la plaque annulaire 30' :
- soit deux zones distinctes de rigidification 47'A, 47'B de la membrane 12' situées respectivement entre le corps 11' et la zone de déformation 40' de la membrane 12' et entre la zone de déformation 40' et le piston 13' (configuration correspondant à la demi-vue de gauche de la figure 3) ;
- soit une zone unique de rigidification 47' de la membrane 12' située entre le corps 11' et la zone de déformation 40' de la membrane 12' (configuration correspondant à la demi-vue de droite de la figure 3).

On va maintenant décrite le fonctionnement du cylindre de frein 1'.

Lorsque la chambre de pression 10' est remplie de fluide sous pression par la conduite 9', son volume s'agrandit au fur et à mesure de l'introduction du fluide grâce à la mobilité du piston 13'.

Sur la demi-vue de gauche, la surface de la portion déplaçable est minimale, son diamètre correspondant au repère 50'A sur les graduations entourant le piston 13' de cette figure 3. Ce diamètre 50'A qui constitue le diamètre efficace du cylindre de frein 1', est, à peu de chose près, égal au diamètre du piston 13'. Cette disposition correspond à une surface déplaçable minimale.

Sur la demi-vue de droite, la plaque annulaire 30' étant cette fois-ci reliée au piston 13', le diamètre de la portion déplaçable correspond au repère 50'B. Ce diamètre 50'B qui constitue le diamètre efficace du cylindre de frein 1', est ici, bien supérieur au diamètre de la portion déplaçable illustrée sur la demi-vue de gauche.

Cette disposition de la demie vue de droite correspond à une surface déplaçable maximale.

Bien entendu, des plaques annulaires 30' de forme adaptée peuvent être prévues pour faire varier le diamètre efficace du cylindre de frein 1' à une quelconque valeur entre les repères 50'A et 50'B.

Ainsi, pour une même pression appliquée au fluide dans la chambre de pression 10', la surface qui sera déplacée par cette pression pourra être choisie en fonction de la force de freinage que l'on désire obtenir.

Plus précisément, plus la surface déplaçable est minimisée (repère 50'A), plus la force d'enfoncement de la pièce de coin 14' sera faible pour une pression de fluide donnée.

A l'inverse, en maximisant la surface déplaçable (repère 50'B), la force d'enfoncement de la pièce de coin 14' sera alors plus importante pour une même pression donnée.

En variante, et afin d'obtenir des surfaces déplaçables (et donc des forces de freinage) intermédiaires, on adoptera une configuration dans laquelle une première plaque annulaire 30' est fixée au corps 11' et s'étend en direction du piston 13' et où une seconde plaque annulaire 30' est fixée au piston 13' et s'étend en direction du corps 11'.

La (ou les) plaque(s) annulaire(s) 30' sera (seront) donc choisie(s) en fonction de la timonerie 2 de frein sur laquelle sera monté ce cylindre de frein 1'. Ce cylindre de frein 1' peut ainsi être adapté à différentes timoneries simplement en changeant la ou les plaque(s) annulaire(s) 30'.

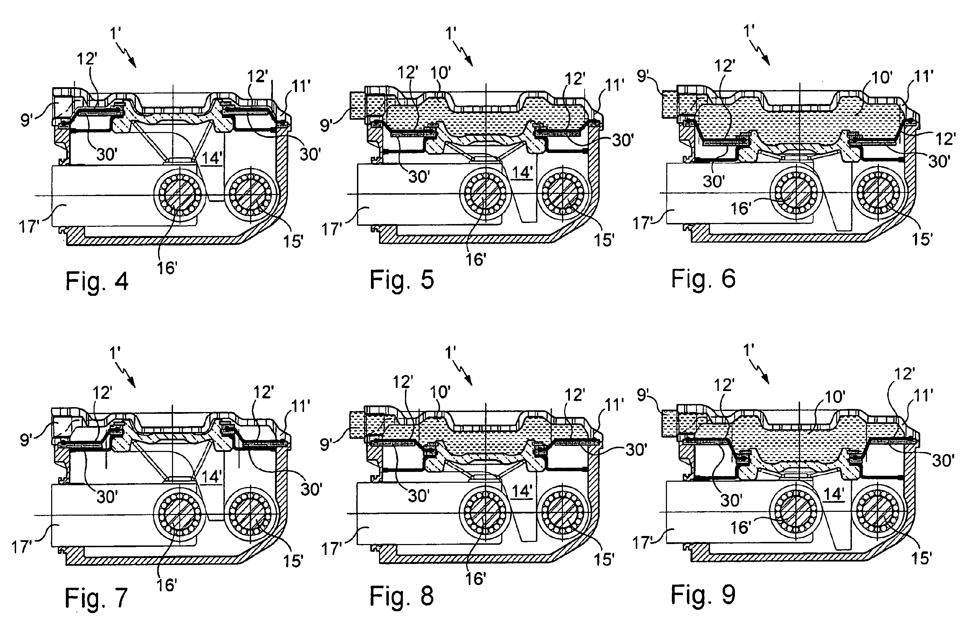

Le comportement en freinage d'un cylindre de frein 1' selon la demie vue de gauche de la figure 3 est illustré aux figures 7 à 9 tandis qu'un exemple de comportement en freinage d'un cylindre de frein 1' selon la demie vue de droite de la figure 3 est illustré aux figures 4 à 6.

En référence aux figures 4 à 6, la plaque annulaire 30' définit une surface déplaçable maximale comme indiqué précédemment. A la figure 4, le cylindre de frein 1' est en position d'attente, tel que représenté à la figure 3. La pièce de coin 14' n'est engagée que par son extrémité entre les deux butées à roulement 15', 16'. Le frein est desserré.

La figure 5 correspond à une configuration à mi-freinage, c'est-à-dire que seule une partie du volume maximum de la chambre de pression 10' a été remplie par l'introduction du fluide de pression par le conduit 9', le piston 13' est approximativement à la moitié de sa course et l'ensemble déplaçable constitué du piston 13' et de la plaque annulaire 30' se rapproche des butées à roulement 15', 16' au fur et à mesure de l'enfoncement de la pièce de coin 14' entre ces dernières. Ce mouvement est permis par la souplesse de la membrane déformable 12'.

La figure 6 correspond à un état de freinage maximum dans lequel le piston est parvenu au bout de sa course et le volume maximum que la chambre de pression 10' peut atteindre est rempli.

De manière similaire, les figures 7 à 9 font référence à la demie vue de gauche de la figure 3, la surface déplaçable étant donc ici minimale.

Les figures 8 et 9 illustrent le mouvement du piston 13' jusqu'à l'atteinte de sa course maximale.

Une comparaison entre la figure 6 et la figure 9 montre la différence de surface déplaçable associée au piston 13' dans cette position de freinage.

La configuration de la plaque annulaire 30' sera choisie en fonction de la force requise pour actionner une timonerie donnée.

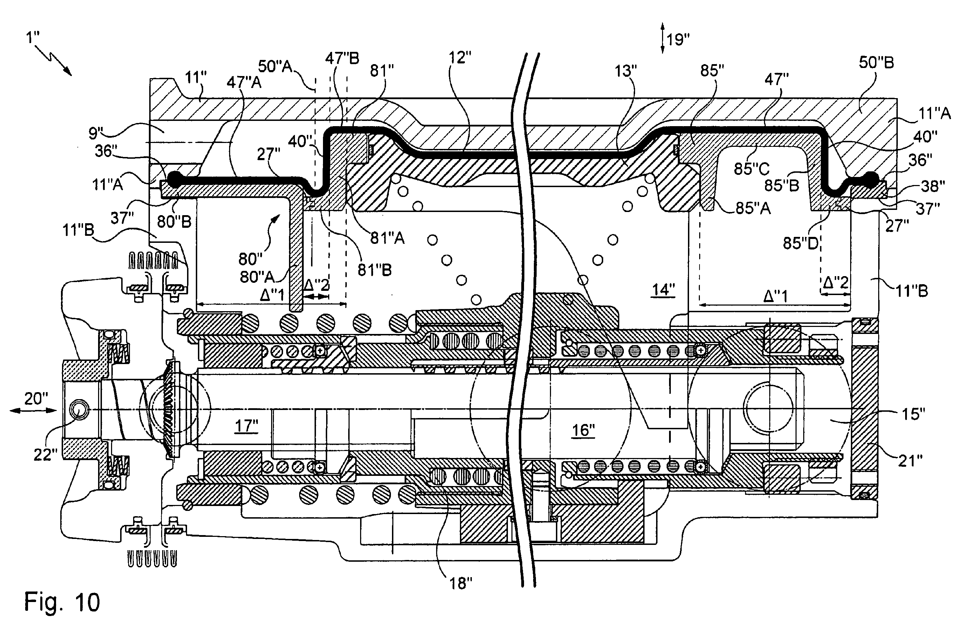

A l'appui de la figure 10, on va maintenant décrire le cylindre de frein 1", selon un deuxième mode de réalisation de l'invention. Les éléments semblables aux éléments du cylindre de frein 1 décrit précédemment gardent la même numérotation mais avec un ".

Le cylindre de frein 1" comporte ainsi un corps 11" formant une enveloppe dans laquelle sont montés les différents éléments du cylindre de frein 1", notamment un piston 13" mobile selon une première direction 19" et fixé à une pièce de coin 14" adaptée à coopérer à enfoncement entre une première butée à roulement 15" et une deuxième butée à roulement 16". La première butée à roulement 15" est montée sur le corps 11" et la deuxième butée à roulement 16" est montée à l'extrémité d'une tige de poussée 17", mobile selon une deuxième direction 20", dont l'autre extrémité 22" est destinée à être raccordée à l'une des articulations 8 des schémas des figures 1 et 2, l'autre articulation 8 étant fixée sur une fixation 21" solidaire du corps 11 ".

Un ressort 18" sollicite la tige de poussée 17" pour que la deuxième butée à roulement 16" se rapproche de la première butée à roulement 15", c'est-à-dire vers la position d'attente du cylindre de frein 1 (qui est celle représentée à la figure 10).

Le corps 11" comporte un conduit 9" pour le branchement du fluide sous pression, ce conduit 9" débouchant dans une chambre de pression 10" située entre le corps 11" et le piston 13" et fermée par une membrane déformable 12" en forme de disque recouvrant le piston 13" et dont l'extrémité est fixée au corps 11 ".

La membrane 12" est une membrane de type à déroulement réalisée en un matériau souple tel que par exemple un élastomère adapté à la coopération avec le fluide sous pression.

Suivant les configurations adoptées, un ou deux éléments annulaires rigides de conformation sont par ailleurs disposés juste en dessous de la membrane 12" entre le diamètre interne du corps 11" et le diamètre externe du piston 13". Les parties gauche et droite de la figure 10 illustrent deux configurations distinctes possibles.

Sur la demi-vue de gauche de la figure 10, on trouve deux éléments. Le premier élément 80" est constitué d'un fût cylindrique creux 80"A orienté selon l'axe du piston 13" dont saille transversalement de son extrémité supérieure, une plaque annulaire rigide 80''B s'étendant vers l'extérieur du fût 80''A.

L'extrémité libre de la plaque 80''B est fixée avec l'une des extrémités de la membrane 12" sur le corps 11'' de sorte que la plaque annulaire s'étend en direction du piston 13".

Le deuxième élément 81" est constitué d'un fût cylindrique creux 81 "A (dont la face interne présente une forme complémentaire de celle de l'extrémité externe du piston 13" auquel elle est fixée) et dont saille transversalement de son extrémité inférieure, une excroissance annulaire rigide 81''B s'étendant vers l'extérieur du fût 81 "A.

Cette excroissance annulaire 81"B comporte à son extrémité distale, un joint de glissement 27" adapté à racler la paroi interne du fût cylindrique 80"A lors du déplacement du piston 13".

Sur la demi-vue de droite, en revanche, on trouve un seul élément 85" présentant une section transversale en forme de U renversé et constitué de deux fûts cylindriques 85"A et 85''B, creux, concentriques et dont les extrémités supérieures respectives sont reliées par une plaque annulaire 85"C s'étendant transversalement à ces deux fûts. De la même manière que pour le fût 81"A, la face interne du fût 85"A présente une forme complémentaire de celle de l'extrémité externe du piston 13" auquel elle est fixée. Une excroissance annulaire rigide 85"D semblable à l'excroissance 81''B, saille transversalement de l'extrémité inférieure du fût 85''B vers le bord interne du corps 11". Cette excroissance annulaire 85"D comporte à son extrémité distale, un joint de glissement 27" adapté à racler le bord interne du corps 11'' lors du déplacement du piston 13".

Sur la demi-vue de gauche de la figure 10, l'extrémité de la membrane déformable 12" est rattachée au corps 11", qui est ici divisé en deux demi-corps 11 "A et 11''B assemblés l'un à l'autre, en serrant la membrane déformable 12" et la plaque annulaire 80"B de l'élément 80" entre deux épaulements 36" et 37" pratiqués respectivement dans les deux demi-corps 11 "A et 11 "B.

Sur la demi-vue de droite de la figure 10, le montage de l'autre extrémité de la membrane déformable 12" se fait de manière similaire si ce n'est que l'élément 80" est remplacé par un anneau 38" de serrage de corps.

Quelle que soit la configuration adoptée, les éléments 80", 81" et 85" et l'anneau de serrage 38" constituent des moyens de conformation de la membrane déformable 12" qui définissent une zone annulaire de déformation 40" de cette membrane 12" quand le piston 13" change de position par rapport au corps 11''.

Le piston 13" et les moyens de conformation 80", 81'', 85" et 38" sont agencés pour que la différence Δ''1 entre le diamètre interne du corps 11'' et le diamètre externe du piston 13" soit au moins égale à quatre fois la différence Δ''2 entre le diamètre interne et le diamètre externe de la zone de déformation 40".

Il reste ainsi au moins les trois quarts de cette différence Δ''1 pour former selon la configuration choisie :
- soit deux zones distinctes de rigidification 47"A, 47''B de la membrane 12" situées respectivement entre le corps 11" et la zone de déformation 40" de la membrane 12" et entre la zone de déformation 40" et le piston 13" (configuration correspondant à la demi-vue de gauche de la figure 10) ;
- soit une zone unique de rigidification 47" de la membrane 12" située entre le corps 11" et la zone de déformation 40" de la membrane 12" (configuration correspondant à la demi-vue de droite de la figure 10).

Le fonctionnement du cylindre de frein 1" est semblable à celui du cylindre 1' décrit précédemment.

Lorsque la chambre de pression 10" est remplie de fluide sous pression par la conduite 9", son volume s'agrandit au fur et à mesure de l'introduction du fluide grâce à la mobilité du piston 13", la membrane 12" se déroulant progressivement dans la zone de déformation 40".

Sur la demi-vue de gauche, la membrane 12" s'appuie à l'extérieur, contre la paroi interne du fût 80"A et à l'intérieur, contre la paroi externe du fût 81"A. La surface de la portion déplaçable est minimale, son diamètre correspondant au repère 50"A de cette figure 10. Ce diamètre 50"A qui constitue le diamètre efficace du cylindre de frein 1", est, à peu de chose près, égal au diamètre du piston 13". Cette disposition correspond à une surface déplaçable minimale.

Sur la demi-vue de droite, la membrane 12" s'appuie à l'extérieur, contre la paroi interne du corps 11" et à l'intérieur, contre la paroi externe du fût 85"B. L'élément 80" étant relié au piston 13", le diamètre de la portion déplaçable correspond au repère 50"B. Ce diamètre 50"B qui constitue le diamètre efficace du cylindre de frein 1", est ici, bien supérieur au diamètre de la portion déplaçable illustrée sur la demi-vue de gauche.

Cette disposition de la demie vue de droite correspond à une surface déplaçable maximale.

Des variantes de réalisation d'un tel cylindre de frein peuvent être envisagées sans pour autant sortir du cadre de l'invention. Notamment, l'ensemble formé par le piston 13', la membrane déformable 12' et la plaque annulaire 30' peut être réalisé différemment tout en remplissant les mêmes fonctions.

## Revendications

1. Cylindre de frein adapté à actionner un frein ferroviaire, **caractérisé en ce qu'**il comporte :
- un corps (11' ; 11") ;
- un piston (13' ; 13") mobile par rapport au corps (11' ; 11") suivant une direction axiale prédéterminée (19' ; 19") ;
- une membrane déformable (12' ; 12") fermant, entre ledit piston (13' ; 13") et ledit corps (11' ; 11"), une chambre de pression (10' ; 10") dont le volume varie avec la position dudit piston (13' ; 13") par rapport audit corps (11' ; 11") ; et
- des moyens de conformation (30', 31', 32', 38' ; 80", 81'', 85", 38") de ladite membrane (12' ; 12") pour définir une zone annulaire (40' ; 40') où se produit la déformation de la membrane (12' ; 12") quand le piston (13' ; 13") change de position par rapport au corps (11' ; 11 ") ;
ledit corps (11' ; 11''), ledit piston (13' ; 13") et lesdits moyens de conformation (30', 31', 32', 38' ; 80", 81'', 85", 38") étant agencés pour que la différence (Δ'1 ; Δ''1) entre le diamètre interne du corps (11'' ; 11") et le diamètre externe du piston (13' ; 13") soit au moins égale à quatre fois la différence (Δ'2 ; Δ''2) entre le diamètre interne et le diamètre externe de la zone de déformation (40' ; 40') de la membrane (12' ; 12"), grâce à quoi il reste au moins trois quarts de la différence (Δ'1 ; Δ''1) entre le diamètre interne du corps (11' ; 11") et le diamètre externe du piston (13' ; 13") pour former au moins une zone annulaire (47', 47'A, 47'B ; 47", 47"A, 47''B) où la membrane (12' ; 12") est rigidifiée par lesdits moyens de conformation (30', 31', 32', 38' ; 80", 81", 85", 38"), la ou les zone(s) de rigidification (47' ; 47") de la membrane (12' ; 12") étant située(s) entre le corps (11' ; 11 ") et la zone de déformation (40' ; 40") de la membrane (12' ; 12") et/ou entre la zone de déformation (40' ; 40") de la membrane (12' ; 12") et le piston (13' ; 13'').

2. Cylindre de frein selon la revendication 1, **caractérisé en ce que** ladite membrane (12') est annulaire avec ses deux extrémités fixées respectivement au corps (11') et au piston (13').

3. Cylindre de frein selon la revendication 2, **caractérisé en ce qu'**il comporte en outre une jupe de guidage (26') s'étendant sur tout le pourtour dudit piston (13') en direction dudit corps (11'), à l'extérieur de ladite chambre de pression (10') et munie d'un joint de glissement (27') adapté à coopérer avec ledit corps (11').

4. Cylindre de frein selon l'une des revendications 2 à 3, **caractérisé en ce que** lesdits moyens de conformation (30', 31', 32', 38') comportent au moins une plaque annulaire rigide (30') et des moyens de serrage (31', 32', 38') de ladite membrane (12') sur ledit corps (11') ou ledit piston (12').

5. Cylindre de frein selon la revendication 4, **caractérisé en ce qu'**il comporte une seule dite plaque annulaire (30') fixée audit corps (11') et s'étendant en direction dudit piston (13').

6. Cylindre de frein selon la revendication 4, **caractérisé en ce qu'**il comporte une seule dite plaque annulaire (30') fixée audit piston (13') et s'étendant en direction dudit corps (11').

7. Cylindre de frein selon la revendication 4, **caractérisé en ce qu'**il comporte une première dite plaque annulaire (30') fixée audit corps (11') et s'étendant en direction dudit piston (13') et une seconde dite plaque annulaire (30') fixée audit piston (13') et s'étendant en direction dudit corps (11').

8. Cylindre de frein selon la revendication 1, **caractérisé en ce que** ladite membrane (12") recouvre ledit piston (13"), son extrémité étant fixée au corps (11").

9. Cylindre de frein selon la revendication 8, **caractérisé en ce que** lesdits moyens de conformation (80", 81'', 85", 38") comportent au moins un élément annulaire (80", 81", 85") disposé juste en dessous de la dite membrane (12") entre le corps (11") et le piston (13').

10. Cylindre de frein selon la revendication 9, **caractérisé en ce que** lesdits moyens de conformation comportent deux dits éléments annulaires (80", 81 ") fixés par l'une de leurs extrémités, respectivement audit corps (11'') et audit piston (13").

11. Cylindre de frein selon la revendication 10, **caractérisé en ce que** l'extrémité de la membrane déformable (12") est montée serrée sur le corps (11") entre un épaulement (36") du corps (11") et l'élément annulaire (80") fixé par l'une de ses extrémités audit corps (11'').

12. Cylindre de frein selon l'une des revendications 10 ou 11, **caractérisé en ce que** l'élément annulaire (81") fixé audit piston (13") par l'une de ses extrémités, est muni à son extrémité opposée, d'un joint de glissement (27") adapté à coopérer avec la paroi interne de l'élément annulaire (80") fixé audit corps (11'').

13. Cylindre de frein selon l'une des revendications 10 à 12, **caractérisé en ce que** ladite membrane (12") est adaptée à se dérouler dans ladite zone de déformation (40") en s'appuyant à l'extérieur contre la paroi interne de l'élément annulaire (80") fixé audit corps (11") et à l'intérieur, contre la paroi externe de l'élément annulaire (81 ") fixé audit piston (13").

14. Cylindre de frein selon la revendication 9, **caractérisé en ce que** lesdits moyens de conformation comportent un seul élément annulaire (85") fixé par l'une de ses extrémités, audit piston (13").

15. Cylindre de frein selon la revendication 14, **caractérisé en ce que** l'extrémité de la membrane déformable (12") est montée serrée sur le corps (11'') entre un épaulement (36") du corps (11") et un anneau (38") de serrage de corps.

16. Cylindre de frein selon l'une des revendications 14 ou 15, **caractérisé en ce que** l'élément annulaire (85") fixé audit piston (13") par l'une de ses extrémités, est muni à son extrémité opposée, d'un joint de glissement (27") adapté à coopérer avec le bord interne dudit corps (11").

17. Cylindre de frein selon l'une des revendications 14 à 16, **caractérisé en ce que** ladite membrane (12") est adaptée à se dérouler dans ladite zone de déformation (40") en s'appuyant à l'extérieur contre la paroi interne dudit corps (11 ") et à l'intérieur, contre la paroi externe de l'élément annulaire (85") fixé audit piston (13").

18. Gamme de cylindres de frein, **caractérisée en ce qu'**elle comporte un premier cylindre de frein selon l'une des revendications 1 à 17 et un deuxième cylindre de frein selon l'une des revendications 1 à 17, le premier cylindre de frein et le deuxième cylindre de frein comportant chacun un même corps (11' ; 11 "), un même piston (13' ; 13") mais dont les moyens de conformation (30', 31', 32', 38' ; 80", 81'', 85", 38") et les zones annulaires (40' ; 40') de déformation de ladite membrane (12' ; 12") sont différents.

19. Gamme de cylindres de frein selon la revendication 18, **caractérisée en ce que** le premier cylindre de frein et le deuxième cylindre de frein comporte également chacun une même membrane (12' ; 12").

20. Gamme de cylindres de frein selon l'une des revendications 18 ou 19, **caractérisée en ce qu'**elle comporte au moins quatre cylindres dont les moyens de conformation (30', 31', 32', 38' ; 80", 81", 85", 38") et les zones annulaires (40' ; 40') de déformation de ladite membrane (12' ; 12") sont différents.

## Claims

1. A brake cylinder adapted to actuate a rail transport brake, **characterized in that** it comprises:
- a body (11' ; 11 ");
- a piston (13' ; 13") moveable relative to the body (11' ; 11") in a predetermined axial direction (19' ; 19");
- a deformable membrane (12' ; 12") closing, between said piston (13' ; 13") and said body (11' ; 11"), a pressure chamber (10' ; 10") the volume of which varies with the position of said piston (13' ; 13'') relative to said body (11' ; 11") ; and
- means (30', 31', 32', 38' ; 80", 81", 85", 38") for conforming said membrane (12' ; 12") to define an annular zone (40' ; 40') where the deformation of the membrane (12' ; 12") occurs when the piston (13' ; 13") changes position relative to the body (11' ; 11 ");
said body (11' ; 11"), said piston (13' ; 13") and said conforming means (30', 31', 32', 38' ; 80", 81", 85", 38") being arranged in order for the difference (Δ'1 ; Δ''1) between the inner diameter of the body (11'; 11") and the outer diameter of the piston (13' ; 13") to be at least equal to four times the difference (Δ'2 ; Δ''2) between the inner diameter and the outer diameter of the deformation zone (40' ; 40') of the membrane (12' ; 12"), by virtue of which there remain at least three quarters of the difference (Δ'1 ; Δ''1) between the inner diameter of the body (11' ; 11 ") and the outer diameter of the piston (13' ; 13") to form at least one annular zone (47', 47'A, 47'B ; 47", 47"A, 47''B) where the membrane (12' ; 12") is rigidified by said conforming means (30', 31', 32', 38' ; 80", 81", 85", 38"), the rigidification zone or zones (47' ; 47") of the membrane (12' ; 12") being situated between the body (11' ; 11") and the deformation zone (40' ; 40") of the membrane (12' ; 12") and/or between the deformation zone (40' ; 40") of the membrane (12' ; 12") and the piston (13' ; 13").

2. A brake cylinder according to claim 1, **characterized in that** said membrane (12') is annular with its two ends respectively fastened to the body (11') and to the piston (13').

3. A brake cylinder according to claim 2, **characterized in that** it further comprises a guide skirt (26') extending over the whole periphery of said piston (13') towards said body (1'), externally of said pressure chamber (10') and provided with a sliding seal (27') adapted to cooperate with said body (11').

4. A brake cylinder according to one of claims 2 to 3, **characterized in that** said conforming means (30', 31', 32', 38') comprise at least one rigid annular plate (30') and means (31', 32', 38') for clamping said membrane (12') onto said body (11') or said piston (12').

5. A brake cylinder according to claim 4, **characterized in that** it comprises a single said annular plate (30') fastened to said body (11') and extending towards said piston (13').

6. A brake cylinder according to claim 4, **characterized in that** it comprises a single said annular plate (30') fastened to said piston (13') and extending towards said body (11').

7. A brake cylinder according to claim 4, **characterized in that** it comprises a first said annular plate (30') fastened to said body (11') and extending towards said piston (13') and a second said annular plate (30') fastened to said piston (13') and extending towards said body (11').

8. A brake cylinder according to claim 1, **characterized in that** said membrane (12") covers said piston (13"), its end being fastened to said body (11").

9. A brake cylinder according to claim 8, **characterized in that** said conforming means (80", 81", 85", 38") comprise at least one annular member (80", 81", 85") disposed just below said membrane (12") between the body (11'') and the piston (13').

10. A brake cylinder according to claim 9, **characterized in that** said conforming means comprise two said annular members (80", 81") fastened by one of their ends, respectively to said body (11") and to said piston (13").

11. A brake cylinder according to claim 10, **characterized in that** the end of the deformable membrane (12") is clampingly mounted on the body (11") between a shoulder (36") of the body (11'') and the annular member (80") fastened by one of its ends to said body (11'').

12. A brake cylinder according to one of claims 10 or 11, **characterized in that** the annular member (81") fastened to said piston (13") by one of its ends, is provided at its opposite end, with a sliding seal (27") adapted to cooperate with the inner wall of the annular member (80") fastened to said body (11 ").

13. A brake cylinder according to one of claims 14 to 12, **characterized in that** said membrane (12") is adapted to unroll in said deformation zone (40") while bearing externally against the inner wall of the annular member (80") fastened to said body (11'') and internally, against the outer wall of the annular member (81'') fastened to said piston (13").

14. A brake cylinder according to claim 9, **characterized in that** said conforming means comprise a single annular member (85") fastened by one of its ends, to said piston(13'')

15. A brake cylinder according to claim 14, **characterized in that** the end of the deformable membrane (12") is clampingly mounted on the body (11") between a shoulder (36") of the body (11 ") and a body clamping ring (38").

16. A brake cylinder according to one of claims 14 or 15, **characterized in that** the annular member (85") fastened to said piston (13") by one of its ends, is provided at its opposite end, with a sliding seal (27") adapted to cooperate with the inner rim of said body (11'').

17. A brake cylinder according to one of claims 14 to 16, **characterized in that** said membrane (12") is adapted to unroll in said deformation zone (40") while bearing externally against the inner wall of said body (11'') and internally, against the outer wall of the annular member (85") fastened to said piston (13").

18. A set of brake cylinders, **characterized in that** it comprises a first brake cylinder according to one of claims 1 to 17 and a second brake cylinder according to one of claims 1 to 17, the first brake cylinder and the second brake cylinder each comprising the same body (11' ; 11 ") and the same piston (13' ; 13") but for which the conforming means (30', 31', 32', 38' ; 80", 81", 85", 38") and the annular deformation zones (40' ; 40') of said membrane (12' ; 12") are different.

19. A set of brake cylinders according to claim 18, **characterized in that** the first brake cylinder and the second brake cylinder also each comprise the same membrane (12'; 12").

20. A set of brake cylinders according to one of claims 18 or 19, **characterized in that** it comprises at least four cylinders of which the conforming means (30', 31', 32', 38' ; 80", 81", 85", 38") and the annular deformation zones (40' ; 40') of said membrane (12' ; 12") are different.

## Patentansprüche

1. Bremszylinder, der eine Schienenfahrzeugbremse betätigen kann, **dadurch gekennzeichnet, dass** er umfasst:
- einen Körper (11'; 11");
- einen Kolben (13', 13"), der in Bezug auf den Körper (11'; 11") längs einer vorgegebenen axialen Richtung (19', 19") beweglich ist;
- eine verformbare Membran (12'; 12"), die zwischen dem Kolben (13', 13") und dem Körper (11'; 11") eine Druckkammer (10'; 10") verschließt, deren Volumen sich mit der Position des Kolbens (13'; 13") in Bezug auf den Körper (11'; 11") verändert; und
- Formanpassungsmittel (30', 31', 32', 38'; 80'', 81'', 85", 38") der Membran (12'; 12"), um eine ringförmige Zone (40'; 40') zu definieren, an der die Verformung der Membran (12'; 12'') erfolgt, wenn der Kolben (13', 13 ") seine Position in Bezug auf den Körper (11'; 11") ändert;
wobei der Körper (11'; 11"), der Kolben (13', 13") und die Formanpassungsmittel (30', 31', 32', 38'; 80", 81", 85", 38") dazu ausgelegt sind, die Differenz (Δ'1 : Δ"1) zwischen dem Innendurchmesser des Körpers (11'; 11") und dem Außendurchmesser des Kolbens (13', 13") wenigstens gleich der vierfachen Differenz (Δ'2; Δ"2) zwischen dem Innendurchmesser und dem Außendurchmesser der Verformungszone (40'; 40') der Membran (12'; 12") zu machen, wodurch wenigstens drei Viertel der Differenz (Δ'1; Δ"1) zwischen dem Innendurchmesser des Körpers (11'; 11") und dem Außendurchmesser des Kolbens (13', 13") verfügbar bleiben, um wenigstens eine ringförmige Zone (47', 47'A, 47'B; 47", 47"A, 47"B) zu bilden, in der die Membran (12'; 12") durch die Formanpassungsmittel (30', 31', 32', 38'; 80", 81", 85", 38") versteift ist, wobei sich die Versteifungszone(n) (47'; 47") der Membran (12'; 12") zwischen dem Körper (11'; 11'') und der Verformungszone (40'; 40") der Membran (12'; 12") und/oder zwischen der Verformungszone (40'; 40") der Membran (12'; 12") und dem Kolben (13', 13") befindet (befinden).

2. Bremszylinder nach Anspruch 1, **dadurch gekennzeichnet, dass** die Membran (12') ringförmig ist, wobei ihre zwei Enden am Körper (1') bzw. am Kolben (13') befestigt sind.

3. Bremszylinder nach Anspruch 2, **dadurch gekennzeichnet, dass** er außerdem eine Führungsschilrze (26') aufweist, die sich um den gesamten Umfang des Kolbens (13') in Richtung des Körpers (11') außerhalb der Druckkammer (10') erstreckt und mit einer Gleitdichtung (27') versehen ist, die dazu ausgelegt ist, mit dem Körper (11') zusammenzuwirken.

4. Bremszylinder nach einem der Ansprüche 2 bis 3, **dadurch gekennzeichnet, dass** die Formanpassungsmittel (30', 31', 32', 38') wenigstens eine starre ringförmige Platte (30') und Klemmmittel (31', 32', 38') für die Membran (12') am Körper (11') oder am Kolben (12') umfassen.

5. Bremszylinder nach Anspruch 4, **dadurch gekennzeichnet, dass** er eine einzige so genannte ringförmige Platte (30') umfasst, die am Körper (11') befestigt ist und sich in Richtung des Kolbens (13') erstreckt.

6. Bremszylinder nach Anspruch 4, **dadurch gekennzeichnet, dass** er eine einzige so genannte ringförmige Platte (30') umfasst, die am Kolben (13') befestigt ist und sich in Richtung des Körpers (11') erstreckt.

7. Bremszylinder nach Anspruch 4, **dadurch gekennzeichnet, dass** er eine erste so genannte ringförmige Platte (30'), die am Körper (11') befestigt ist und sich in Richtung des Kolbens (13') erstreckt, und eine zweite so genannte ringförmige Platte (30'), die am Kolben (13') befestigt ist und sich in Richtung des Körpers (11') erstreckt, umfasst.

8. Bremszylinder nach Anspruch 1, **dadurch gekennzeichnet, dass** die Membran (12") den Kolben (13') abdeckt, wobei sein Ende am Körper (11') befestigt ist.

9. Bremszylinder nach Anspruch 8, **dadurch gekennzeichnet, dass** die Formanpassungsmittel (80", 81", 85", 38") wenigstens ein ringförmiges Element (80", 81", 85") umfassen, das direkt unter der Membran (12") zwischen dem Körper (11") und dem Kolben (13') angeordnet ist.

10. Bremszylinder nach Anspruch 9, **dadurch gekennzeichnet, dass** die Formanpassungsmittel zwei so genannte ringförmige Elemente (80", 81") umfassen, die durch eines ihrer Enden am Körper (11") bzw. am Kolben (13") befestigt sind.

11. Bremszylinder nach Anspruch 10, **dadurch gekennzeichnet, dass** das Ende der verformbaren Membran (12") am Körper zwischen einer Schulter (36") des Körpers (11") und dem ringförmigen Element (80"), das durch eines seiner Enden an dem Körper (11") befestigt ist, festgeklemmt montiert ist.

12. Bremszylinder nach einem der Ansprüche 10 oder 11, **dadurch gekennzeichnet, dass** das ringförmige Element (81"), das an dem Kolben (13") durch eines seiner Enden befestigt ist, an seinem gegenüberliegenden Ende mit einer Gleitdichtung (27") versehen ist, die dazu ausgelegt ist, mit der Innenwand des am Körper (11") befestigten ringförmigen Elements (80") zusammenzuwirken.

13. Bremszylinder nach einem der Ansprüche 10 bis 12, **dadurch gekennzeichnet, dass** die Membran (12") dazu ausgelegt ist, sich in der Verformungszone (40") abzuwickeln, indem sie sich nach außen an der Innenwand des ringförmigen Elements (80"), das am Körper (11") befestigt ist, und nach innen an der Außenwand des ringförmigen Elements (81"), das am Kolben (13") befestigt ist, abstützt.

14. Bremszylinder nach Anspruch 9, **dadurch gekennzeichnet, dass** die Formanpassungsmittel ein einziges ringförmiges Element (85") umfassen, das durch eines seiner Enden an dem Kolben (13") befestigt ist.

15. Bremszylinder nach Anspruch 14, **dadurch gekennzeichnet, dass** das Ende der verformbaren Membran (12") an dem Körper (11") zwischen einer Schulter (36") des Körpers (11") und einem Klemmring (38") des Körpers festgeklemmt montiert ist.

16. Bremszylinder nach einem der Ansprüche 14 oder 15, **dadurch gekennzeichnet, dass** das ringförmige Element (85"), das an dem Kolben (13") durch eines seiner Enden befestigt ist, an seinem gegenüberliegenden Ende mit einer Gleitdichtung (27") versehen ist, die dazu ausgelegt ist, mit dem Innenrand des Körpers (11") zusammenzuwirken.

17. Bremszylinder nach einem der Ansprüche 14 bis 16, **dadurch gekennzeichnet, dass** die Membran (12") dazu ausgelegt ist, sich in der Verformungszone (40") abzuwickeln, in dem sie sich nach außen an der Innenwand des Körpers (11") und nach innen an der Außenwand des ringförmigen Elements (85"), das an dem Kolben (13") befestigt ist, abstützt.

18. Brernszylinderreihe, **dadurch gekennzeichnet, dass** sie einen ersten Bremszylinder nach einem der Ansprüche 1 bis 17 und einen zweiten Bremszylinder nach einem der Ansprüche 1 bis 17 umfasst, wobei der erste Bremszylinder und der zweite Bremszylinder jeweils denselben Körper (11'; 11") und denselben Kolben (13', 13") aufweisen, deren Formanpassungsmittel (30', 31', 32', 38'; 80", 81 ", 85", 38") und deren ringförmige Zonen (40'; 40') für die Verformung der Membran (12'; 12") jedoch verschieden sind.

19. Bremszylinderreihe nach Anspruch 18, **dadurch** gekenntzeichnet, dass der erste Bremszylinder und der zweite Bremszylinder außerdem jeweils dieselbe Membran (12'; 12") enthalten.

20. Bremszylinderreihe nach einem der Ansprüche 18 oder 19, **dadurch gekennzeichnet**, das sie wenigstens vier Zylinder umfasst, deren Formanpassungsmittel (30', 31', 32', 38'; 80", 81", 85", 38") und deren ringförmige Zonen (40'; 40') für die Verformung der Membran (12'; 12") verschieden sind.
